# EUROPÄISCHE PATENTSCHRIFT

(11) **EP 2 050 658 B1**
(45) Veröffentlichungstag und Bekanntmachung des Hinweises auf die Patenterteilung: **01.02.2012**
(21) Anmeldenummer: 08105564.2
(22) Anmeldetag: 13.10.2008
(51) Int. Cl.: B62D 15/02

(54) **Lenksystem**
Steering system
Système de direction

(30) Priorität: 17.10.2007 DE 102007049787
(43) Veröffentlichungstag der Anmeldung: 22.04.2009
(73) Patentinhaber: Continental Automotive GmbH, 30165 Hannover (DE)
(72) Erfinder: Hannappel, Joachim, 65620, Waldbrunn (DE); Heyer, Christian, 68519, Viernheim (DE); Funk, Andreas, 65760, Eschborn (DE)

(56) Entgegenhaltungen:
- EP-A- 0 982 564
- EP-A- 1 342 648
- EP-A- 1 632 421
- DE-A1- 4 006 683
- DE-A1- 4 008 105
- DE-A1- 10 344 267
- DE-A1-102006 014 700
- US-A1- 2002 175 574

## Beschreibung

Die Erfindung betrifft ein Lenksystem für ein Kraftfahrzeug nach dem Oberbegriff des Patentanspruch 1.

Ein Lenkwinkel von einem mit dem Lenksystem verbundenen Lenkrad und/oder mit dem Lenksystem verbundenen lenkbaren Rädern wird typischerweise als ein Eingangssignal eines ESP-Systems in einem Kraftfahrzeug verwendet. Abhängig von dem ermittelten Lenkwinkel und weiteren Informationen erkennt das ESP-System eine beabsichtigte Kraftfahrzeugbewegung. Ferner erkennt das ESP-System abhängig von dem ermittelten Lenkwinkel und abhängig von einer Änderung des Lenkwinkels über die Zeit plötzliche Lenkbewegungen am Lenkrad oder andere Anzeichen für einen Verlust der Fahrzeugkontrolle. Die beabsichtigte Kraftfahrzeugbewegung wird dann mit der tatsächlichen verglichen und mittels des ESP-Systems so angepasst, dass das Kraftfahrzeug die beabsichtigte Bewegungsrichtung einnimmt.

In der Druckschrift "Sensoren zur Positionserfassung - Lenkwinkelsensor Single-Turn/Multi-Turn" veröffentlicht von Hella KGaA Hueck & Co., Lippstadt, Bö/08.05/1.0 wird ein Lenkwinkelsensor dargestellt, der in ein Lenkgetriebe des Lenksystems integriert werden kann. Der Lenkwinkelsensor ist dazu ausgebildet, den absoluten Lenkwinkel, sowie eine Geschwindigkeit des Lenkradeinschlages zu erfassen und mittels eines Pulsweitensignals auszugeben. Der Sensor ist des Weiteren dazu ausgebildet, auch Mehrfachumdrehungen des Lenkrades zu erfassen und als absoluten Lenkwinkel mittels des Pulsweitensignals auszugeben.

Aus der EP 1 632 421 A2 ist ein Lenksystem der eingangs genannten Gattung bekannt. Bei dem vorbekannten Lenksystem werden der Betrag und die Richtung der Signale eines Drehwinkelsensors bei ausgeschalteter Zündung des Fahrzeugs in einem Speicher des Lenksystems abgelegt. Nach dem Einschalten der Zündung müssen erst die gespeicherten Werte mit aktuellen Signalen des Drehwinkelsensors verknüpft werden und die Größe des tatsächlichen, bei ausgeschalteter Zündung veränderten Lenkwinkels bestimmt werden. Diese Verknüpfung und Bestimmung nimmt eine gewisse Zeit in Anspruch, sodass der tatsächliche Lenkwinkel nach dem Einschalten der Zündung nicht sofort zur Verfügung steht.

Die der Erfindung zugrunde liegende Aufgabe ist es, ein Lenksystem der eingangs genannten Gattung dahingehend zu verbessern, dass der tatsächliche Lenkwinkel unmittelbar nach dem Einschalten der Zündung zur Verfügung steht, möglichst genau ist und kostengünstig ist.

Die Aufgabe wird gelöst durch die Merkmale des unabhängigen Patentanspruchs. Vorteilhafte Ausgestaltungen der Erfindung sind in den Unteransprüchen gekennzeichnet.

Die Erfindung zeichnet sich aus durch ein Lenksystem für ein Kraftfahrzeug mit einem Lenkrad und lenkbaren Rädern, das eine Auswerteeinheit und eine Sensoreinheit umfasst, wobei die Sensoreinheit dazu ausgebildet ist, ein Sensorsignal zu erfassen, das repräsentativ ist für einen Lenkwinkel des Lenkrades, und die Auswerteeinheit zum Auswerten des Sensorsignals der Sensoreinheit ausgebildet ist und zwar derart, dass während einer ausgeschalteten Zündung des Kraftfahrzeugs mindestens ein Teil der Auswerteeinheit und der Sensoreinheit eingeschaltet ist und mittels des eingeschalteten Teils der Auswerteeinheit das Sensorsignal ausgewertet wird. Änderungen des Lenkwinkels während der ausgeschalteten Zündung des Kraftfahrzeugs können beispielsweise durch ein Abstützen am Lenkrad während des Aussteigens aus dem Kraftfahrzeug erfolgen oder während des Rollens des Kraftfahrzeugs mit den lenkbaren Rädern gegen eine Bordsteinkante. Dadurch, dass die Auswerteeinheit und die Sensoreinheit während der ausgeschalteten Zündung weiterhin eingeschaltet sind, kann besonders genau ein lenkwinkelrepräsentatives Sensorsignal ausgewertet werden.

Gemäß der Erfindung ist das Lenksystem dazu ausgebildet, bei ausgeschalteter Zündung des Kraftfahrzeugs die Sensoreinheit mittels der Auswerteeinheit getaktet anzusteuern und abhängig von der getakteten Ansteuerung mittels der Sensoreinheit das Sensorsignal zu erfassen, wobei bei einer abhängig von dem erfassten Sensorsignal mittels der Auswerteeinheit ermittelten Lenkwinkeländerung die Sensoreinheit permanent angesteuert wird. Dadurch kann besonders geeignet der typischerweise hohe Strombedarf der Sensoreinheit bei permanenter Ansteuerung dadurch reduziert werden, dass zunächst getaktet angesteuert und erst bei einer erfassten Lenkwinkeländerung die Sensoreinheit für eine vorgegebene Zeitdauer, wie in einem Normalbetrieb angesteuert wird, so insbesonderes permanent.

Gemäß der Erfindung umfasst die Auswerteeinheit mindestens zwei Zähleinheiten mit jeweils mindestens einem Zähler und ist dazu ausgebildet, die mindestens zwei Zähleinheiten während der ausgeschalteten Zündung eingeschaltet zu lassen und die mindestens zwei Zähler der mindestens zwei Zähleinheiten abhängig von der Lenkwinkeländerung des Lenkrades und/oder der lenkbaren Räder entweder zu inkrementieren oder zu dekrementieren. Während der ausgeschalteten Zündung des Kraftfahrzeugs sind nur die erste und die zweite Zähleinheit der Auswerteeinheit eingeschaltet, wodurch eine Lenkwinkeländerung besonders stromsparend und somit kostengünstig erfasst werden kann.

Gemäß einer weiteren vorteilhaften Ausgestaltung umfassen die mindestens zwei Zähleinheiten jeweils mindestens eine Analogeinheit, die dazu ausgebildet ist, abhängig von der Lenkwinkeländerung des Lenkrades und/oder der lenkbaren Räder ein Zustandssignal zu erzeugen und zwar derart, das einer vorgegebenen Lenkwinkeländerung ein vorgegebener Zustand zugeordnet wird. Durch die Verwendung der Analogeinheiten kann besonders eindeutig der Lenkwinkeländerung des Lenkrades und/oder der lenkbaren Räder ein vorgegebener Zustand zugeordnet werden. Einem vorgegebenen Winkelbereich des Lenkwinkels kann somit ein Zustand zugeordnet werden, wodurch im Weiteren nicht der gesamte Winkelbereich zwischen 0° und 360° überwacht werden muss, sondern nur der jeweilige Zustand.

Gemäß einer weiteren vorteilhaften Ausgestaltung umfassen die mindestens zwei Zähleinheiten jeweils mindestens einen Zustandsautomaten, der dazu ausgebildet ist, abhängig von dem Zustandssignal und dem von diesem vorgegebenen Zustand entweder ein Inkrementsignal oder ein Dekrementsignal zu erzeugen, mittels dessen der mindestens eine Zähler der jeweiligen Zähleinheit entweder zum Inkrementieren oder zum Dekrementieren angesteuert wird. Durch die Verwendung von Zustandsautomaten zur Erzeugung der jeweiligen Inkrementsignale oder Dekrementsignale kann besonders genau der jeweilige Zähler inkrementiert oder dekrementiert werden. Die durch das Zustandssignal vorgegebenen Zustände können in dem jeweiligen Zustandsautomaten interpretiert werden. Dadurch kann bei einem eingangsseitig anliegenden vorgegebenen Zustand oder einem vorgegebenen Zustandsübergang das Inkrementsignal oder das Dekrementsignal ausgangsseitig vorgegeben werden, wodurch der jeweilige Zähler entweder inkrementiert oder dekrementiert wird.

Gemäß einer weiteren vorteilhaften Ausgestaltung erzeugt der Zustandsautomat der ersten Zähleinheit ein erstes Inkrementsignal und ein erstes Dekrementsignal, die winkelversetzt sind zu einem zweiten Inkrementsignal und einem zweiten Dekrementsignal, die von dem Zustandsautomat der zweiten Zähleinheit erzeugt werden. Die Winkelversetzung der Inkrementsignale und Dekrementsignale ergibt sich typischerweise durch eine unterschiedliche Vorgabe des jeweiligen Inkrementsignals oder Dekrementsignals mittels des jeweiligen Zustandsautomaten bei unterschiedlichen Zuständen. Dadurch ergibt sich vorteilhafterweise auch eine versetzte Ansteuerung des jeweiligen Zählers, wodurch eine winkelgleiche Inkrementierung oder Dekrementierung der Zähler vermieden wird und somit jeweils einer der Zähler ohne eine Gefahr der Zählstandsänderung ausgelesen werden kann.

Gemäß einer weiteren vorteilhaften Ausgestaltung umfasst das Lenksystem einen elektrischen Lenkmotor mit einem Rotor zur Lenkunterstützung der lenkbaren Räder und die Sensoreinheit einen Sensor zur Erfassung einer Position des Rotors des elektrischen Lenkmotors. Durch die Verwendung des Sensors zur Erfassung der Position des Rotors kann besonders einfach und kostengünstig die Sensoreinheit das lenkwinkelrepräsentierende Sensorsignal vorgeben. Für moderne Lenksysteme werden zur Lenkunterstützung des Fahrers beim Lenken des Kraftfahrzeugs elektrische Lenkmotoren eingesetzt. Diese verstärken typischerweise ein vom Fahrer auf das Lenkrad ausgeübtes Drehmoment zum Ändern des Lenwinkels der lenkbaren Räder während eines Betriebs des Kraftfahrzeugs. Abhängig von dem ausgeübten Drehmoment des Fahrers, wird das Drehmoment des elektrischen Lenkmotors entsprechend vorgegeben und geregelt. Für die Regelung werden typischerweise Zustandsgrößen des Lenkmotors benötigt, wie beispielsweise die aktuelle Position des Rotors des Lenkmotors bezogen auf einen Bezugspunkt, die mittels des Sensors erfasst wird. Ist ein Übersetzungsverhältnis der Drehungen des Lenkrades zu den entsprechenden Drehungen des Rotors des elektrischen Lenkmotors über den gesamten Lenkwinkelbereich vorgegeben, kann der für die Regelung verwendete Sensor auch zur Ermittlung des absoluten Lenkwinkels des Lenkrades und/oder der lenkbaren Räder verwendet werden. Dadurch kann ein herkömmlich verwendeter Lenkwinkelsensor, der typischerweise im Lenkgetriebe oder an einer Lenkstange des Lenksystems befestigt ist, entfallen.

Gemäß einer weiteren vorteilhaften Ausgestaltung ist das Lenksystem dazu ausgebildet, die mindestens zwei Zähler der mindestens zwei Zähleinheiten nach jeweils einer mittels des Sensors detektierten vollen Umdrehung des Rotors des elektrischen Lenkmotors entweder zu inkrementieren oder zu dekrementieren. Auf diese Weise können die Zähler besonders genau inkrementiert oder dekrementiert werden.

Gemäß einer weiteren vorteilhaften Ausgestaltung ist das Lenksystem dazu ausgebildet, die mindestens zwei Zähler abhängig von einer Drehrichtung des Rotors des elektrischen Lenkmotors entweder zu inkrementieren oder zu dekrementieren und zwar derart, dass in einer ersten Drehrichtung der jeweilige Zähler inkrementiert wird und in einer zweiten, entgegengesetzten Drehrichtung der jeweilige Zähler dekrementiert wird. Somit repräsentiert der jeweilige Zählerstand besonders vorteilhaft die tatsächliche Lenkwinkeländerung ohne eine zusätzliche Berechnung durchführen zu müssen.

Gemäß einer weiteren vorteilhaften Ausgestaltung umfasst das Lenksystem eine Entscheidungseinheit, die dazu ausgebildet ist, nach dem Einschalten der Zündung des Kraftfahrzeugs abhängig von einem Winkelsignal, das repräsentativ ist für den gerade gültigen Sensorwert des Sensors, einen der mindestens zwei Zähler auszuwählen, abhängig von dessen Zählerstand die Lenkwinkeländerung des Lenkrades und/oder der lenkbaren Räder erfasst wird. Abhängig vom Winkelsignal kann der Bereich, innerhalb dessen der jeweilige Zähler seinen Zählerstand nicht verändert, ermittelt werden und abhängig davon der jeweilige Zähler sicher ausgewählt werden.

Das Winkelsignal repräsentiert den gerade gültigen Sensorwert des Sensors. Der Sensor ist typischerweise dazu ausgebildet, eine absolute Winkelstellung des Rotors des elektrischen Lenkmotors bezogen auf einen vorgegebenen Bezugspunkt innerhalb einer vollen Umdrehung des Rotors vorzugeben. Der Sensor ist typischerweise nicht dazu ausgebildet, Mehrfachumdrehungen des Rotors zu erfassen. Somit kann auch das Winkelsignal nur eine absolute Winkelstellung des Rotors bezogen auf einen vorgegebenen Bezugspunkt innerhalb einer vollen Umdrehung des Rotors vorgeben.

Gemäß einer weiteren vorteilhaften Ausgestaltung umfasst das Lenksystem eine Fehlererkennungseinheit, die dazu ausgebildet ist, nach dem Einschalten der Zündung des Kraftfahrzeugs die Zählerstände der mindestens zwei Zähler miteinander zu vergleichen und abhängig von dem Ergebnis des Vergleichs einen Fehler anzuzeigen. So können besonders sicher fehlerhafte Zählerstände angezeigt werden.

Gemäß einer weiteren vorteilhaften Ausgestaltung ist das Lenksystem dazu ausgebildet, in einem vorgegebenen Betriebsmodus des Lenksystems die Sensoreinheit und/oder die Auswerteeinheit stromsparend zu betreiben. Auf diese Weise werden bei ausgeschalteter Zündung die Sensoreinheit und/oder die Auswerteeinheit derart betrieben, dass das Bordnetz des Kraftfahrzeugs nicht unnötig belastet wird.

Gemäß einer weiteren vorteilhaften Ausgestaltung ist das Lenksystem dazu ausgebildet, in dem vorgegebenen Betriebsmodus des Lenksystems die Sensoreinheit und/oder die Auswerteeinheit bei ausgeschalteter Zündung des Kraftfahrzeugs auszuschalten. Auf diese Weise wird der Strombedarf der Sensoreinheit und/oder der Auswerteeinheit besonders vorteilhaft reduziert und das Lenksystem besonders kostengünstig betrieben.

Gemäß einer weiteren vorteilhaften Ausgestaltung ist das Lenksystem dazu ausgebildet, in dem vorgegebenen Betriebsmodus des Lenksystems die Sensoreinheit bei ermittelter Lenkwinkeländerung bei ausgeschalteter Zündung des Kraftfahrzeugs weiterhin getaktet anzusteuern. So wird eine permanente Ansteuerung der Sensoreinheit und somit ein besonders hoher Strombedarf des Lenksystems im vorgegebenen Betriebsmodus vermieden.

Gemäß einer weiteren vorteilhaften Ausgestaltung ist der vorgegebene Betriebsmodus des Lenksystems für eine vorgegebene Anzahl von Einschaltvorgängen und/oder Ausschaltvorgängen der Zündung des Kraftfahrzeugs vorgebbar. Auf diese Weise wird der Betriebsmodus der Sensoreinheit und/oder der Auswerteeinheit nur für die vorgegebene Anzahl von Einschalt- und/oder Ausschaltvorgängen vorgegeben und danach deaktiviert, so dass eine Lenkwinkeländerung während der ausgeschalteten Zündung des Kraftfahrzeugs wieder möglich ist.

Gemäß einer weiteren vorteilhaften Ausgestaltung ist der vorgegebene Betriebsmodus des Lenksystems mittels einer Diagnosevorrichtung vorgebbar. Auf diese Weise kann der vorgegebene Betriebsmodus aktiviert oder deaktiviert werden und somit eine Lenkwinkeländerung während der ausgeschalteten Zündung nicht erfasst oder erfasst werden.

Ausführungsbeispiele der Erfindung sind im Folgenden anhand der schematischen Zeichnungen näher erläutert. Es zeigen:
- Figur 1: eine schematische Darstellung einer Auswerteeinheit,
- Figur 2: eine zeitliche Darstellung von Sensorwerten eines Sensors,
- Figur 3: eine zeitliche Darstellung eines Inkrementsignals und Dekrementsignals,
- Figur 4: eine zweite schematische Darstellung der Auswerteeinheit,
- Figur 5: eine dritte schematische Darstellung der Auswerteeinheit.

Elemente gleicher Konstruktion oder Funktion sind figurenübergreifend mit den gleichen Bezugszeichen gekennzeichnet.

Moderne lenkunterstützende Lenksysteme umfassen typischerweise elektrische Lenkmotoren zur Unterstützung einer Lenkkraft eines Fahrers eines Kraftfahrzeugs. Die Lenkmotoren unterstützen den Fahrer beim Erreichen seiner beabsichtigten Lenkrichtung, solange dieser ein entsprechendes Drehmoment auf ein mit dem Lenksystem verbundenes Lenkrad ausübt. Der elektrische Lenkmotor im Lenksystem wird typischerweise mittels einer Steuer- und/oder Regeleinheit angesteuert. Zum Betreiben der Steuer- und/oder Regeleinheit wird neben anderen Zustandsgrößen des elektrischen Lenkmotors die aktuelle Position des Rotors des elektrischen Lenkmotors benötigt. Die Position des Rotors wird typischerweise mittels eines Sensors erfasst, der bezogen auf einen Bezugspunkt eine absolute Winkelstellung des Rotors innerhalb einer vollen Umdrehung des Rotors vorgibt. Ist das Übersetzungsverhältnis zwischen Drehungen am Lenkrad zu entsprechenden Drehungen des Rotors des elektrischen Lenkmotors über den gesamten Lenkwinkelbereich vorgegeben, kann der für die Steuer- und/oder Regeleinheit verwendete Sensor auch zur Ermittlung des absoluten Lenkwinkels des Lenkrades und/oder mit dem Lenksystem verbundenen lenkbaren Räder verwendet werden.

In den folgenden näheren Erläuterungen der Ausführungsbeispiele wird der für die Steuer- und Regeleinheit benötigte Sensor des elektrischen Lenkmotors auch zur Erfassung des Lenkwinkels des Lenkrades und/oder der lenkbaren Räder verwendet.

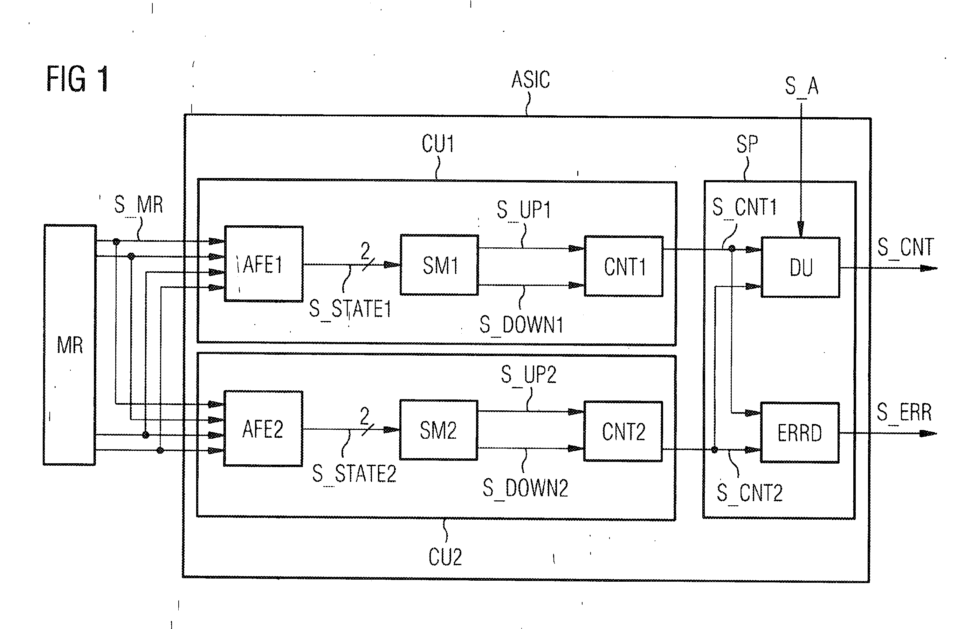

In Figur 1 ist eine Auswerteeinheit ASIC dargestellt, die als applikationsspezifisches integriertes Bauelement ausgebildet ist und für die Erfassung von Lenkwinkeländerungen verwendet wird. Aus den Lenkwinkeländerungen wird der absolute Lenkwinkel ermittelt. Die Auswerteeinheit ASIC umfasst aus Redundanzgründen eine erste Zähleinheit CU1 und eine zweite Zähleinheit CU2, denen eingangsseitig ein Sensorsignal S_MR des Sensors MR zugeordnet ist.

Der Sensor MR zur Erfassung der Position des Rotors des elektrischen Lenkmotors ist typischerweise als magnetoresistiver Messsensor ausgebildet, der ein Sinus- und ein Kosinussignal als Sensorsignal S_MR an die Auswerteeinheit ASIC liefert. Einem anliegenden Sensorsignalwert des Sinus- und Kosinussignals kann direkt ein Winkel des Rotors des elektrischen Lenkmotors bezogen auf den vorgegebenen Bezugspunkt zugeordnet werden. Dabei ist der Sensor MR derart ausgebildet, dass ein Winkelbereich von 0° bis 360° bezogen auf den vorgegebenen Bezugspunkt zu einer vollen Umdrehung des Rotors korrespondiert. Grundsätzlich lassen sich aber auch andere Umdrehungsbereiche des Rotors durch den vom Sensor vorgegebenen Winkelbereich repräsentieren, so z. B. halbe oder viertel Umdrehungen des Rotors. Zur Vereinfachung wird in den folgenden Ausführungsbeispielen eine volle Umdrehung des Rotors durch den Winkelbereich von 0° bis 360° bezogen auf den vorgegebenen Bezugspunkt repräsentiert.

Des Weiteren ist der Sensor MR derart ausgebildet, dass Mehrfachumdrehungen des Rotors mit dem Sensor MR selbst typischerweise nicht erfasst werden können. Grundsätzlich sind auch mehrere Sensoren MR zur Erfassung der Position des Rotors denkbar, so z. B. kann jeweils ein Sensor MR jeweils einer Zähleinheit zugeordnet sein. Der Sensor MR kann in einer vorteilhaften Ausführung von der Auswerteeinheit ASIC angesteuert werden, so z. B. permanent oder getaktet. Dadurch kann der Sensor MR besonders stromsparend betrieben werden.

Neben der Ausbildung des Sensors MR als magnetoresistiver Messsensor sind auch andere dem Fachmann bekannte Ausbildungen verwendbar.

Die erste Zähleinheit CU1 umfasst eine erste Analogeinheit AFE1, einen ersten Zustandsautomaten SM1 und einen ersten Zähler CNT1. Der ersten Analogeinheit AFE1 ist das Sensorsignal S_MR eingangsseitig zugeordnet. Ausgangsseitig ist die erste Analogeinheit AFE1 dem ersten Zustandsautomat SM1 mittels eines ersten Zustandssignals S_STATE1 zugeordnet. Die erste Analogeinheit AFE1 kann als Schnittstelle zwischen dem analogen Sensorsignal S_MR und dem digitalen ersten Zustandssignal S_STATE1 angesehen werden.

Dem ersten Zustandsautomat SM1 ist eingangsseitig das erste Zustands signal S_STATE1 zugeordnet. Abhängig von diesem erzeugt der erste Zustandsautomat SM1 ausgangsseitig ein erstes Inkrementsignal S_UP1 und ein erstes Dekrementsignal S_DOWN1, die dem ersten Zähler CNT1 eingangsseitig zugeordnet sind. Der erste Zähler CNT1 ist als Aufwärts- und Abwärtszähler ausgebildet und inkrementiert seinen aktuellen Zählerstand abhängig von dem ersten Inkrementsignal S_UP1 und dekrementiert seinen aktuellen Zählerstand abhängig von dem ersten Dekrementsignal S_DOWN1. Ausgangsseitig erzeugt der erste Zähler CNT1 ein erstes Zählersignal S_CNT1.

Die zweite Zähleinheit CU2 ist analog zu der ersten Zähleinheit CU1 ausgebildet, umfassend eine zweite Analogeinheit AFE2, einen zweiten Zustandsautomaten SM2, sowie einen zweiten Zähler CNT2.

Die erste und zweite Zähleinheit CU1 und CU2 sind derart ausgebildet, dass sie auch bei ausgeschalteter Zündung eingeschaltet bleiben. Es sind auch mehr als zwei Zähleinheiten verwendbar.

Ferner umfasst die Auswerteeinheit ASIC einen Signalprozessor SP, dem eingangsseitig das erste Zählersignal S_CNT1 und das zweite Zählersignal S CNT2, sowie ein Winkelsignal S_A, das repräsentativ ist für den gerade gültigen Sensorwert des Sensors MR, zugeordnet ist. Der Signalprozessor SP umfasst neben einer Fehlererkennungseinheit ERRD eine Entscheidungseinheit DU. Der Entscheidungseinheit DU, sowie der Fehlererkennungseinheit ERRD ist eingangsseitig das erste und das zweite Zählersignal S_CNT1 und S_CNT2 zugeordnet. Des Weiteren ist der Entscheidungseinheit DU das Winkelsignal S_A zugeordnet. Die Entscheidungseinheit DU erzeugt ausgangsseitig ein Lenkwinkelsignal S_CNT. Die Fehlererkennungseinheit ERRD erzeugt ausgangsseitig ein Fehlerstatussignal S_ERR.

Die Auswerteeinheit ASIC ist typischerweise mittels einer Kommunikationsschnittstelle mit einem Lenk- oder ESP-Steuergerät des Kraftfahrzeugs verbunden. Die Kommunikationsschnittstelle ist typischerweise als CAN- oder SPI-Schnittstelle ausgebildet und ermöglicht somit eine Kommunikation mit dem Lenk- oder ESP-Steuergerät mittels eines CAN- oder SPI-Bussystems. Mittels der Kommunikationsschnittstelle wird das Lenkwinkelsignal S_CNT der Entscheidungseinheit DU und/oder das Fehlerstatussignal S_ERR der Fehlererkennungseinheit ERRD übermittelt.

Der Signalprozessor SP mit der Entscheidungseinheit DU und der Fehlererkennungseinheit ERRD ist mittels der Zündung des Kraftfahrzeugs ein- oder ausschaltbar ausgebildet.

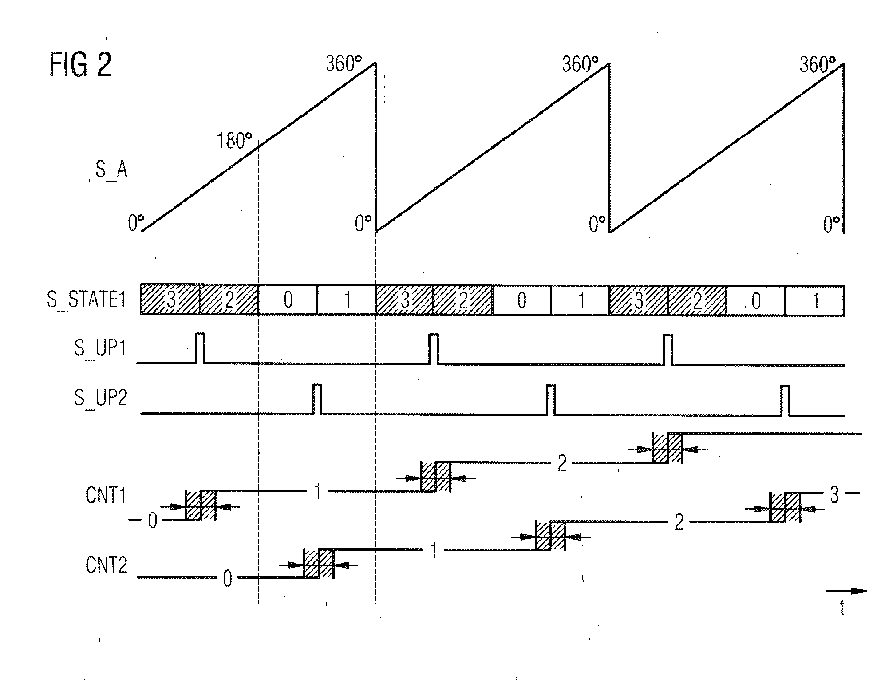

Anhand der Figur 2 wird die Funktion der Auswerteeinheit näher erläutert.

In Figur 2 ist das Winkelsignal S_A dargestellt, das repräsentativ ist für den gerade gültigen Sensorwert des Sensors MR. Das Winkelsignal S_A repräsentiert den Winkel ϕ mit Werten zwischen 0° und 360°, wobei einem Durchlauf von 0° bis 360° einer vollen Umdrehung des Rotors des elektrischen Lenkmotors zugeordnet ist. Typischerweise ist der absolute Winkel des Winkelsignals S_A besonders einfach durch eine Tangensbildung aus dem Sinus- und Kosinussignal des Sensorsignals S_MR ermittelbar. In Figur 2 sind somit drei volle Umdrehungen des Rotors dargestellt.

Neben dem Winkelsignal S_A sind drei Zustandsdurchläufe des ersten Zustandssignals S_STATE1 dargestellt. Das mittels der ersten Analogeinheit AFE1 erzeugte erste Zustandssignal S_STATE1 kann vier verschiedene Zustände annehmen. Einen Zustand 0, einen Zustand 1, einen Zustand 2 und einen Zustand 3. Das erste Zustandssignal S_STATE1 ist typischerweise aufgrund der vier verschiedenen Zuständen zweiwertig ausgebildet, das heißt, es wird mittels zweier Signalleitungen dem ersten Zustandsautomaten SM1 zugeführt.

Ist beispielsweise der Rotor des elektrischen Lenkmotors um einen Winkel ϕ zwischen 0° und 90° bezogen auf den vorgegebenen Bezugspunkt winkelverdreht, wird mittels der ersten Analogeinheit AFE1 das erste Zustandssignal S_STATE1 derart erzeugt, dass mittels diesem der Zustand 3 dem ersten Zustandsautomaten SM1 eingangsseitig zugeführt wird. Ist der Rotor beispielsweise um den Winkel ϕ zwischen 90° und 180° bezogen auf den vorgegebenen Bezugspunkt verdreht, wird der Zustand 2 dem ersten Zustandsautomaten SM1 zugeführt. Für eine Rotorposition zwischen 180° und 270° wird der Zustand 0 vorgegeben und für eine Rotorposition 270° bis 360° wird der Zustand 1 vorgegeben. Typischerweise umfasst zur Erzeugung der vier verschiedenen Zustände die erste Analogeinheit AFE1 Komparatoren und taktgesteuerte Schaltelemente, so z. B. Flipflops.

Somit repräsentieren die mittels der ersten Analogeinheit AFE1 erzeugten vier Zustände des ersten Zustandssignals S_STATE1 jeweils einen vorgegebenen Winkelbereich des Rotors des elektrischen Lenkmotors.

Dreht sich der Rotor des Lenkmotors in eine vorgegebene erste Drehrichtung mit aufsteigenden Winkelwerten, d.h. beginnend von dem Winkel ϕ gleich 0° bis zum Winkel ϕ gleich 360°, werden nacheinander die Zustände 3 2 0 1 durchlaufen. In einer entgegengesetzten zweiten Drehrichtung des Rotors werden die Zustände 1 0 2 3 nacheinander durchlaufen.

Die zweite Analogeinheit AFE2 ist analog zur ersten Analogeinheit AFE1 ausgebildet und erzeugt idealerweise ein zum ersten Zustandssignal S_STATE1 identisches zweites Zustandssignal S_STATE2.

Des Weiteren sind das erste und das zweite Inkrementsignal S_UP1 und S_UP2 dargestellt. Abhängig von einem vorgegebenen Zustandsübergang des ersten und zweiten Zustandssignals S_STATE1 und S_STATE2 wird mittels des ersten und zweiten Zustandsautomaten SM1 und SM2 in Figur 1 ein positiver Puls des ersten und zweiten Inkrementsignals S_UP1 und S_UP2 erzeugt. Der erste Zustandsautomat SM1 erzeugt den positiven Puls des ersten Inkrementsignals S_UP1 bei einem Übergang von dem Zustand 3 auf den Zustand 2, während der zweite Zustandsautomat SM2 den positiven Puls des zweiten Inkrementsignals S_UP2 bei einem Übergang von dem Zustand 0 auf den Zustand 1 erzeugt. Grundsätzlich sind auch andere Zustandsübergänge denkbar, wobei darauf zu achten ist, dass sich der relevante Zustandsübergang des ersten Zustandsautomaten SM1 von dem relevanten Zustandsübergang des zweiten Zustandsautomaten SM2 unterscheidet.

Das erste Inkrementsignal S_UP1 ist somit winkelversetzt zu dem zweiten Inkrementsignal S_UP2. Bei dieser vorgegebenen ersten Drehrichtung des Rotors wird kein positiver Puls des ersten und zweiten Dekrementsignals S_DOWN1 und S_DOWN2 erzeugt.

Erfolgt dagegen bei zweiter, entgegengesetzter Drehrichtung des Rotors ein Übergang von dem Zustand 2 auf den Zustand 3, wird ein positiver Puls des ersten Dekrementsignals S_DOWN1 erzeugt (nicht dargestellt), während bei einem Übergang von dem Zustand 1 auf den Zustand 0 ein positiver Puls des zweiten Dekrementsignals S_DOWN2 erzeugt wird (nicht dargestellt). Analog zu dem ersten und zweiten Inkrementsignal S_UP1 und S_UP2 ist auch das erste und zweite Dekrementsignal S_DOWN1 und S_DOWN2 winkelversetzt zueinander. Bei vorgegebener zweiter Drehrichtung des Rotors wird kein positiver Puls des ersten und zweiten Inkrementsignals S_UP1 und S_UP2 erzeugt.

Neben der Erzeugung der Inkrementsignale und Dekrementsignale bei vorgegebenen Zustandsübergängen, ist auch ein vorgegebener Zustand zur Erzeugung des entsprechenden positiven Pulses denkbar.

Abhängig von dem ersten und zweiten Inkrementsignal S_UP1 und S_UP2 und dem ersten und zweiten Dekrementsignal S_DOWN1 und S_DOWN2 werden auch der erste und der zweite Zähler CNT1 und CNT2 versetzt zueinander entweder inkrementiert oder dekrementiert.

Mittels der Entscheidungseinheit DU im Signalprozessor SP der Auswerteeinheit ASIC in Figur 1 wird nach dem Einschalten der Zündung ein Zählerstand der beiden Zähler CNT1 und CNT2 abhängig von dem Winkelsignal S_A ausgewählt, der mittels der Kommunikationsschnittstelle zum Lenk- oder ESP-Steuergerät übermittelt wird. Wie in Figur 2 als schraffierte Flächen beim ersten und zweiten Zähler CNT1 und CNT2 dargestellt, ist ein Inkrementiertzeitpunkt und somit auch ein Dekrementierzeitpunkt nicht eindeutig vorgegeben, sondern kann durch Ungenauigkeiten, die beispielsweise Bauelementtoleranzen und Rauschanteilen im Sensorsignal S_MR zugeordnet werden können, zeitlich verschoben sein. Ein Auslesen des jeweiligen Zählerstandes in diesen Bereichen wird deshalb vermieden. Gibt das Winkelsignal S_A beispielsweise den Winkel ϕ zwischen 0° und 180° vor, wählt die Entscheidungseinheit DU den Zählerstand des zweiten Zählers CNT2, weil innerhalb dieses Winkelbereiches keine Änderung des Zählerstandes erfolgt. Gibt das Winkelsignal S_A den Winkel ϕ zwischen 180° und 360° vor, wird mittels der Entscheidungseinheit DU der Zählerstand des ersten Zählers CNT1 ausgewählt und übermittelt, weil innerhalb dieses Winkelbereiches keine Änderung des Zählerstandes erfolgt. Der Zählerstand des ersten Zählers CNT1 unterscheidet sich allerdings von der tatsächlichen Anzahl der vollen Umdrehungen des Rotors derart, dass er immer um eins größer ist. Deshalb muss vor dem Übermitteln an das Lenk- oder ESP-Steuergerät der Zählerstand des ersten Zälers CNT1 um einen Wert eins subtrahiert werden.

Mittels der Fehlererkennungseinheit ERRD im Signalprozessor SP wird nach dem Einschalten der Zündung des Kraftfahrzeugs der Zählerstand der beiden Zähler CNT1 und CNT2 miteinander verglichen. Da eine Differenz der Zählerstände der beiden Zähler CNT1 und CNT2 bei einem fehlerfreien Betrieb nicht größer sein darf als 1, wird mittels der Fehlererkennungseinheit ERRD bei einer größeren Differenz ein Fehlerstatus mittels des Fehlerstatussignals S_ERR dem Lenk- oder ESP-Steuergerät angezeigt, so dass die Ermittlung des absoluten Lenkwinkels anhand der erfassten Lenkwinkeländerungen nicht gültig ist.

Dabei kann die Auswerteeinheit ASIC derart ausgebildet sein, dass im Fehlerfall beim Erreichen eines vorgegebenen Referenzwinkels des Lenkrades und/oder der lenkbaren Räder durch den Fahrer im Betrieb des Kraftfahrzeugs, so z. B. einen Referenzwinkel von 0°, das Lenk- oder ESP-Steuergerät mittels der Kommunikationsschnittstelle einen für den vorgegebenen Referenzwinkel gültigen Zählerstand für den ersten und zweiten Zähler CNT1 und CNT2 vorgibt, so dass die Auswerteeinheit ASIC den Fehlerstatus verlassen kann. Der Referenzwinkel kann beispielsweise mittels eines separaten Referenzwinkelsensors vorgegeben werden.

Die Aufgabe der Entscheidungseinheit DU und der Fehlererkennungseinheit ERRD können auch als Programm im Signalprozessor SP implementiert sein und mittels diesem abgearbeitet werden.

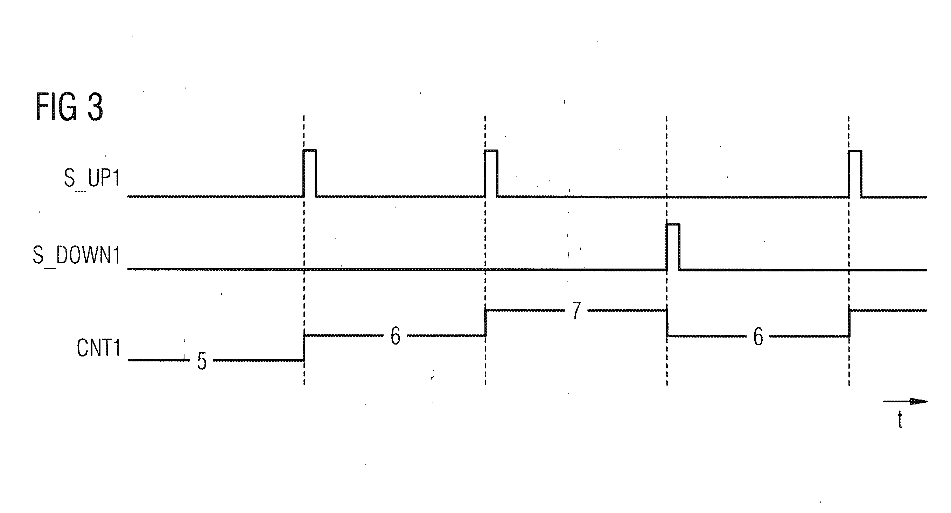

In Figur 3 ist das erste Inkrementsignal S_UP1 und das erste Dekrementsignal S_DOWN1, sowie eine idealisierte Zählerstandsänderung des ersten Zählers CNT1 dargestellt. Der Zählerstand des ersten Zählers CNT1 ist mit einem Wert fünf vorgegeben. Im Weiteren wird angenommen, dass mit diesem vorgegebenen Zählerstand die Zündung ausgeschaltet wird. Wird nun mittels des Lenkrades der Lenkwinkel verändert, oder rollt beispielsweise das Kraftfahrzeug bei ausgeschalteter Zündung mit den lenkbaren Rädern gegen eine Bordsteinkante und wird dadurch der Lenkwinkel in die erste Drehrichtung verändert, erfasst die während der ausgeschalteten Zündung eingeschaltete Auswerteeinheit ASIC eine Lenkwinkeländerung und inkrementiert den ersten Zähler CNT1 bei einer anliegenden steigenden Flanke des ersten Inkrementsignals S_UP1 auf einen Zählerstand von sechs. Wird der Lenkwinkel der lenkbaren Räder weiter in die erste Drehrichtung verändert, wird der erste Zähler CNT1 bei einer weiteren ansteigenden Flanke des ersten Inkrementsignals S_UP1 auf einen Zählerstand von sieben inkrementiert. Wird nun der Lenkwinkel des Lenkrades und/oder der lenkbaren Räder in die entgegengesetzte zweite Drehrichtung verändert, wird bei einer steigenden Flanke des anliegenden ersten Dekrementsignals S_DOWN1 der Zählerstand um eins auf einen Wert von sechs dekrementiert.

Das heißt, nach dem Ausschalten der Zündung des Kraftfahrzeugs, hat sich der Rotor des elektrischen Lenkmotors um zwei volle Umdrehungen in die erste Drehrichtung und um eine volle Umdrehung in die entgegengesetzte zweite Drehrichtung gedreht.

Nach dem Einschalten der Zündung des Kraftfahrzeugs werden somit zur Ermittlung des absoluten Lenkwinkels sechs volle Umdrehung in der ersten Drehrichtung berücksichtigt und der von dem Sensor MR vorgegebene Winkel ϕ innerhalb einer vollen Umdrehung des Rotors in der ersten Drehrichtung. Ferner wird das vorgegebene Übersetzungsverhältnis zwischen Drehungen am Lenkrad zu entsprechenden Drehungen am Rotor des elektrischen Lenkmotors berücksichtigt.

Neben der Verwendung der zwei eingeschalteten Zähleinheiten CU1 und CU2 der Auswerteeinheit bei ausgeschalteter Zündung des Kraftfahrzeugs, ist auch eine Verwendung bei eingeschalteter Zündung möglich. Dabei kann der mittels der Auswerteeinheit ASIC ermittelte Lenkwinkel beispielsweise für Plausibilisierungsüberwachung herangezogen werden.

Neben der Verwendung des Sensors MR des Rotors des elektrischen Lenkmotors als Lenkwinkelsensor, sind auch andere dem Fachmann bekannte Sensoren für die Erfassung des Lenkwinkels des Kraftfahrzeugs denkbar, die mittels der Auswerteeinheit ASIC bei ausgeschalteter Zündung eine Lenkwinkeländerung erfassen.

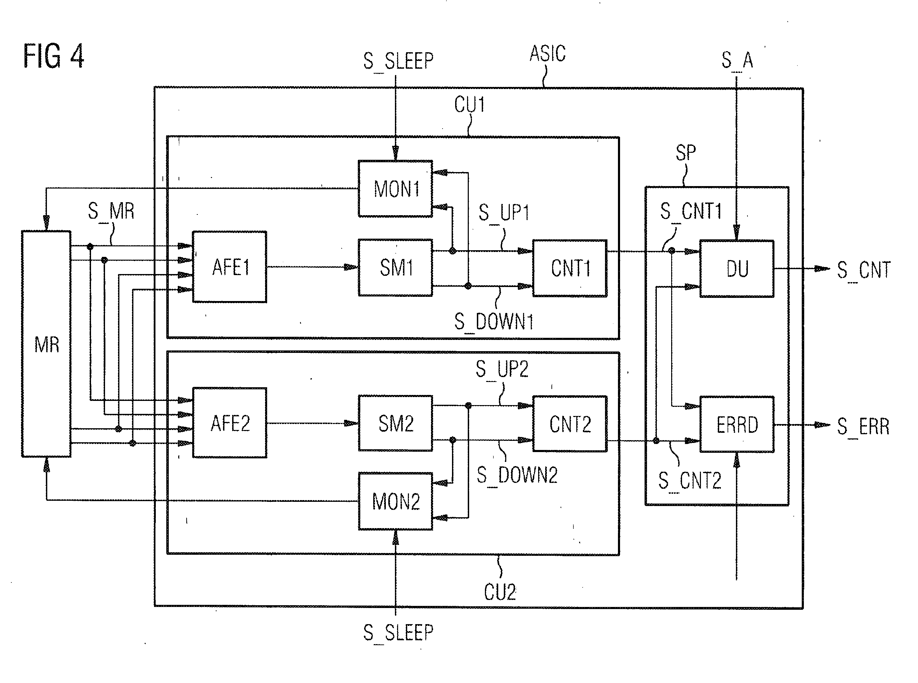

In einem weiteren Ausführungsbeispiel (Figur 4) ist die Auswerteeinheit ASIC mit den zwei Zähleinheiten CU1 und CU2 dargestellt. Die erste Zähleinheit CU1 umfasst nun eine erste Überwachungseinheit MON1. Diese ist derart angeordnet, dass ihr eingangsseitig das erste Inkrementsignal S_UP1 und das erste Dekrementsignal S_DOWN1 zugeordnet sind. Des Weiteren ist ihr eingangsseitig ein Schlafsignal S_SLEEP zugeordnet. Ausgangsseitig ist die erste Überwachungseinheit dem Sensor MR zugeordnet.

Der Sensor MR ist derart ausgebildet, dass er nur dann einen Winkel ϕ des Rotors erfasst, wenn er mittels der ersten Überwachungseinheit MON1 angesteuert wird. Die Ansteuerung kann mittels der ersten Überwachungseinheit MON1 getaktet oder permanent erfolgen, wobei bei permanenter Ansteuerung der Leistungsbedarf des Sensors MR typischerweise höher ist als bei getakteter Ansteuerung, so z. B. 50 bis 60 mal höher.

Die erste Überwachungseinheit MON1 ist analog zu der ersten Zähleinheit CU1 und dem Sensor MR bei ausgeschalteter Zündung des Kraftfahrzeugs weiterhin eingeschaltet.

Die erste Überwachungseinheit MON1 überwacht das erste Inkrementsignal S_UP1 und erste Dekrementsignal S_DOWN1. Wird bei ausgeschalteter Zündung innerhalb einer vorgegebenen Zeitdauer, so z. B. 100 ms, kein positiver Puls des ersten Inkrementsignals S_UP1 oder ersten Dekrementsignals S_DOWN1 erfasst, steuert die erste Überwachungseinheit MON1 den Sensor MR getaktet an, so z. B. alle 10 ms für 100 us. Wird innerhalb der vorgegebenen Zeitdauer ein positiver Puls an dem ersten Inkrementsignal S_UP1 oder ersten Dekrementsignal S_DOWN1 mittels der ersten Überwachungseinheit erfasst, steuert diese den Sensor MR permanent an. Die permanente Ansteuerung des Sensors MR kann auch derart erfolgen, wenn eine vorgegebene Anzahl von positiven Pulsen am ersten Inkrementsignal S_UP1 oder ersten Dekrementsignal S_DOWN1 innerhalb der vorgegebenen Zeitdauer erfasst werden.

Die permanente Ansteuerung wird dann wieder verlassen, wenn innerhalb der vorgegebenen Zeitdauer beispielsweise keine oder eine vorgegebene Anzahl von positiven Pulsen entweder am ersten Inkrementsignal S_UP1 oder ersten Dekrementsignal S_DOWN1 erfasst werden.

Die zweite Überwachungseinheit MON2 in der zweiten Zähleinheit CU2 ist idealerweise identisch zu der ersten Überwachungseinheit MON1 ausgebildet und überwacht das zweite Inkrementsignal S_UP2 und zweite Dekrementsignal S_DOWN2.

In einem weiteren Ausführungsbeispiel wird der Auswerteeinheit ASIC mittels des Betriebssignals S_SLEEP ein vorgegebenen Betriebsmodus vorgegeben. Dieser versetzt bei ausgeschalteter Zündung des Kraftfahrzeugs die bisher weiterhin eingeschalteten Komponenten des Lenksystems in einen stromsparenden Betrieb, um eine Batterie des Kraftfahrzeugs nicht unnötig zu belasten.

Dieser Betriebsmodus ist nach Figur 4 derart ausgebildet, dass abhängig von dem Betriebssignal S_SLEEP die erste und die zweite Überwachungseinheit MON1 und MON2 den Sensor nicht permanent ansteuern, wenn entsprechende Lenkwinkeländerungen mittels der Inkrementsignale oder Dekrementsignale angezeigt werden. Der Sensor MR wird somit mittels der ersten und zweiten Überwachungseinheit MON1 und MON2 weiterhin getaktet angesteuert.

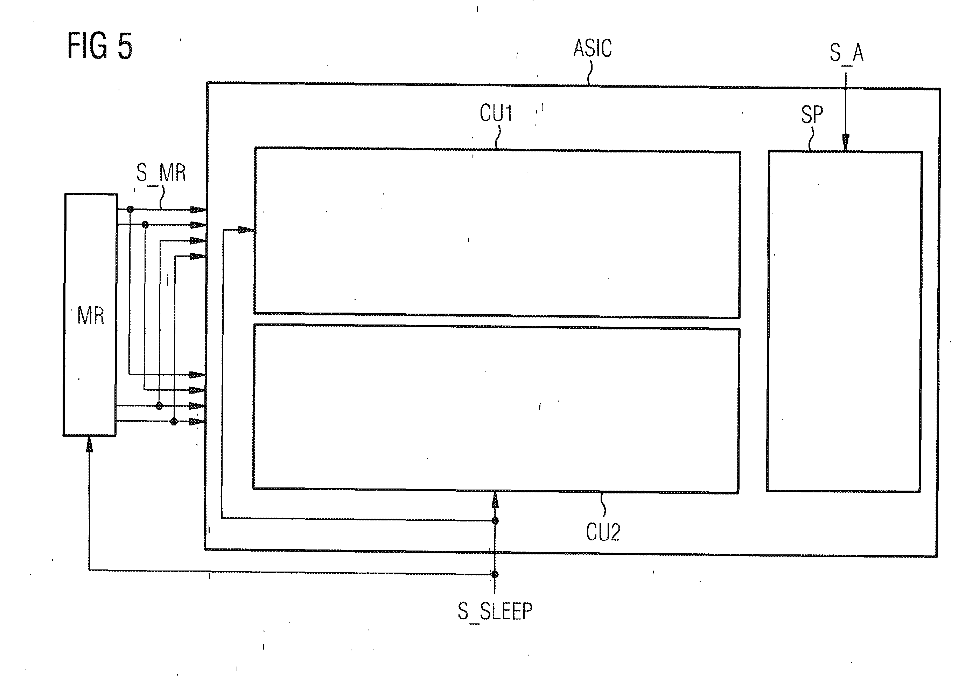

In einem weiteren Ausführungsbeispiel (Figur 5) ist die Auswerteeinheit (ASIC) mit dem Sensor MR dargestellt. Der ersten und zweiten Zähleinheit CU1 und CU2, sowie dem Sensor MR ist eingangsseitig das Betriebssignal S_SLEEP zugeordnet. Die erste und zweite Zähleinheit CU1 und CU2, sowie der Sensor MR sind in Figur 5 ausschaltbar ausgebildet. Somit wird bei ausgeschalteter Zündung mittels des Betriebssignals S SLEEP der vorgegebenen Betriebsmodus derart vorgegeben, dass die erste und zweite Zähleinheit CU1 und CU2, sowie der Sensor MR ausgeschaltet werden.

Das Betriebssignal S SLEEP kann beispielsweise durch das Lenk- oder ESP-Steuergerät mittels der CAN- oder SPI-Kommunikationsschnittstelle dem Lenksystem vorgegeben werden. Aber auch eine direkte Vorgabe des Betriebssignals S_SLEEP ist denkbar.

Der vorgegebene Betriebsmodus wird beispielsweise während eines Transports des Kraftfahrzeugs vorgegeben, bei dem die Zündung typischerweise ausgeschaltet ist. Typischerweise wird in derartigen Situationen, wie dem Transport des Kraftfahrzeugs, eine Erfassung des Lenkwinkels nicht benötigt. Des Weiteren kann es ohne den vorgegebenen Betriebsmodus während des Transports vorkommen, dass es aufgrund von Erschütterungen der jeweiligen Strasse zu permanenten und hochfrequenten Änderungen des Lenkwinkels der lenkbaren Räder kommt, die mittels des Sensors MR und der Auswerteeinheit ASIC erfasst werden. Diese führen, wie in Figur 4 dargestellt, zu der permanenten Ansteuerung des Sensors MR und somit zu einer unnötigen Belastung der Batterie des Kraftfahrzeugs. Mittels des vorgegebenen Betriebsmodus kann diese Belastung vermieden werden.

In einem weiteren Ausführungsbeispiel wird der Betriebsmodus für eine vorgegebene Anzahl von Ein- und/oder Ausschaltvorgängen der Zündung des Kraftfahrzeugs vorgegeben, so z. B. für 5 Ein- und/oder Ausschaltvorgänge. Die Vorgabe der Anzahl der Ein- und/oder Ausschaltvorgänge kann beispielsweise nach einer Fertigung des Kraftfahrzeugs erfolgen, so z. B. für den Transport des Kraftfahrzeugs zu einem Käufer. Die Anzahl der Ein- und/oder Ausschaltvorgänge ist typischerweise derart dimensioniert, dass nach der Tätigung der vorgegebenen Anzahl von Ein- und/oder Ausschaltvorgängen, das Kraftfahrzeug dem Käufer ausgeliefert wurde und der Sensor MR, sowie mindestens ein Teil der Auswerteeinheit ASIC auch bei ausgeschalteter Zündung eingeschaltet bleibt.

In einem weiteren Ausführungsbeispiel wird der Betriebsmodus durch eine Diagnosevorrichtung vorgegeben. Diese kann beispielsweise in einer Werkstatt des Kraftfahrzeugs als Diagnosecomputer ausgebildet sein, der mit dem Kommunikationsnetzwerk des Kraftfahrzeugs koppelbar ist. Mittels des Diagnosecomputers kann der Betriebsmodus aktiviert oder deaktiviert werden und zwar derart, dass zum Zeitpunkt der Auslieferung des Kraftfahrzeugs an den Käufer, das Lenksystem auch bei ausgeschalteter Zündung eine Lenkwinkeländerung erfasst.

## Patentansprüche

1. Lenksystem für ein Kraftfahrzeug mit einem Lenkrad und lenkbaren Rädern, das eine Auswerteeinheit (ASIC) und eine Sensoreinheit (MR) umfasst, wobei die Sensoreinheit (MR) dazu ausgebildet ist, ein Sensorsignal (S MR) zu erzeugen, das repräsentativ ist für einen Lenkwinkel des Lenkrades, und die Auswerteeinheit (ASIC) zum Auswerten des Sensorsignals (S_MR) der Sensoreinheit (MR) ausgebildet ist und zwar derart, dass während einer ausgeschalteten Zündung des Kraftfahrzeugs mindestens ein Teil der Auswerteeinheit (ASIC) und der Sensoreinheit (MR) eingeschaltet ist und mittels des eingeschalteten Teils der Auswerteeinheit (ASIC) das Sensorsignal (S_MR) ausgewertet wird, wobei bei ausgeschalteter Zündung des Kraftfahrzeugs die Sensoreinheit (MR) mittels der Auswerteeinheit (ASIC) getaktet angesteuert wird und abhängig von der getakteten Ansteuerung mittels der Sensoreinheit (MR) das Sensorsignal (S_MR) erfasst wird, wobei bei einer abhängig von dem erfassten Sensorsignal (S_MR) mittels der Auswerteeinheit (ASIC) ermittelten Lenkwinkeländerung die Sensoreinheit (MR) permanent angesteuert wird, **dadurch gekennzeichnet, dass** die Auswerteeinheit (ASIC) mindestens zwei Zähleinheiten (CU1, CU2) mit jeweils mindestens einem Zähler (CNT1, CNT2) umfasst und dazu ausgebildet ist, die mindestens zwei Zähleinheiten (CU1, CU2) während der ausgeschalteten Zündung eingeschaltet zu lassen und die mindestens zwei Zähler (CNT1, CNT2) der mindestens zwei Zähleinheiten (CU1, CU2) abhängig von der Lenkwinkeländerung des Lenkrades und/oder der lenkbaren Räder entweder zu inkrementieren oder zu dekrementieren.

2. Lenksystem nach Anspruch 1, bei dem die mindestens zwei Zähleinheiten (CU1, CU2) jeweils mindestens eine Analogeinheit (AFE1, AFE2) umfassen, die dazu ausgebildet ist, abhängig von der Lenkwinkeländerung des Lenkrades und/oder der lenkbaren Räder ein Zustandssignal (S_STATUS1, S_STATUS2) zu erzeugen und zwar derart, dass einer vorgegebenen Lenkwinkeländerung ein vorgegebener Zustand zugeordnet wird.

3. Lenksystem nach Anspruch 1 oder 2, bei dem die mindestens zwei Zähleinheiten (CU1, CU2) jeweils mindestens einen Zustandsautomaten (SM1, SM2) umfassen, der dazu ausgebildet ist, abhängig von dem Zustandssignal (S_STATE1, S_STATE2) und dem von diesem vorgegebenen Zustand entweder ein Inkrementsignal (S_UP1, S_UP2) oder ein Dekrementsignal (S_DOWN1, S_DOWN2) zu erzeugen, mittels dessen der mindestens eine Zähler (CNT1, CNT2) der jeweiligen Zähleinheit (CU1, CU2) entweder zum Inkrementieren oder zum Dekrementieren angesteuert wird.

4. Lenksystem nach Anspruch 3, bei dem der Zustandsautomat (SM1) der ersten Zähleinheit (CU1) ein erstes Inkrementsignal (S_UP1) und ein erstes Dekrementsignal (S_DOWN1) erzeugt, die winkelversetzt sind zu einem zweiten Inkrementsignal (S_UP2) und einem zweiten Dekrementsignal (S_DOWN2), die von dem Zustandsautomaten (SM2) der zweiten Zähleinheit (CU2) erzeugt werden.

5. Lenksystem nach einem der vorstehenden Ansprüche, das einen elektrischen Lenkmotor mit einem Rotor zur Lenkunterstützung der lenkbaren Räder und die Sensoreinheit einen Sensor (MR) zur Erfassung einer Position des Rotors des elektrischen Lenkmotors umfasst.

6. Lenksystem nach Anspruch 5, das dazu ausgebildet ist, die mindestens zwei Zähler (CNT1, CNT2) der mindestens zwei Zähleinheiten nach jeweils einer mittels der Sensoreinheit (MR) detektierten vollen Umdrehung des Rotors des elektrischen Lenkmotors entweder zu inkrementieren oder zu dekrementieren.

7. Lenksystem nach Anspruch 5 oder 6, das dazu ausgebildet ist, die mindestens zwei Zähler (CNT1, CNT2) abhängig von einer Drehrichtung des Rotors des elektrischen Lenkmotors entweder zu inkrementieren oder zu dekrementieren und zwar derart, dass in einer ersten Drehrichtung der jeweilige Zähler inkrementiert wird und in einer zweiten, entgegengesetzten Drehrichtung der jeweilige Zähler dekrementiert wird.

8. Lenksystem nach Anspruch 5, das eine Entscheidungseinheit (DU) umfasst, die dazu ausgebildet ist, nach dem Einschalten der Zündung des Kraftfahrzeugs abhängig von einem winkelsignal (S_A), das repräsentativ ist für das Sensorsignal (S_MR) der Sensoreinheit (MR), einen der mindestens zwei Zähler (CNT1, CNT2) auszuwählen, abhängig von dessen Zählerstand die Lenkwinkeländerung des Lenkrades und/oder der lenkbaren Räder erfasst wird.

9. Lenksystem nach Anspruch 5, das eine
Fehlererkennungseinheit (ERRD) umfasst, die dazu ausgebildet ist, nach dem Einschalten der Zündung des Kraftfahrzeugs die Zählerstände der mindestens zwei Zähler (CNT1, CNT2) miteinander zu vergleichen und abhängig von dem Ergebnis des Vergleichs einen Fehler anzuzeigen.

10. Lenksystem nach einem der vorstehenden Ansprüche, das dazu ausgebildet ist, in einem vorgegebenen Betriebsmodus des Lenksystems die Sensoreinheit (MR) und/oder die Auswerteinheit (ASIC) stromsparend zu betreiben.

11. Lenksystem nach Anspruch 10, das dazu ausgebildet ist, in dem vorgegebenen Betriebsmodus des Lenksystems die Sensoreinheit (MR) und/oder die Auswerteeinheit (ASIC) bei ausgeschalteter Zündung des Kraftfahrzeugs auszuschalten.

12. Lenksystem nach Anspruch 1 oder 10, das dazu ausgebildet ist, in dem vorgegebenen Betriebsmodus des Lenksystems die Sensoreinheit (MR) bei ermittelter Lenkwinkeländerung bei ausgeschalteter Zündung des Kraftfahrzeugs weiterhin getaktet anzusteuern.

13. Lenksystem nach Anspruch 10, bei dem der vorgegebene Betriebsmodus des Lenksystems für eine vorgegebene Anzahl von Einschaltvorgängen und/oder Ausschaltvorgängen der Zündung des Kraftfahrzeugs vorgebbar ist.

14. Lenksystem nach Anspruch 10, bei dem der vorgegebene Betriebsmodus des Lenksystems mittels einer Diagnosevorrichtung vorgebbar ist.

## Claims

1. Steering system for a motor vehicle having a steering wheel and steerable wheels which comprises an evaluation unit (ASIC) and a sensor unit (MR), wherein the sensor unit (MR) is designed to produce a sensor signal (S MR) which is representative of a steering angle for the steering wheel, and the evaluation unit (ASIC) is designed to evaluate the sensor signal (S_MR) from the sensor unit (MR), specifically such that while the ignition of the motor vehicle is switched off at least one portion of the evaluation unit (ASIC) and of the sensor unit (MR) is switched on and the switched-on portion of the evaluation unit (ASIC) is used to evaluate the sensor signal (S_MR), wherein when the ignition of the motor vehicle is switched off the sensor unit (MR) is actuated in clocked fashion by means of the evaluation unit (ASIC) and, on the basis of the clocked actuation, the sensor unit (MR) is used to capture the sensor signal (S_MR), wherein a change of steering angle ascertained by means of the evaluation unit (ASIC) on the basis of the captured sensor signal (S_MR) prompts the sensor unit (MR) to be actuated constantly, **characterized in that** the evaluation unit (ASIC) comprises at least two counting units (CU1, CU2) having at least one counter (CNT1, CNT2) each and is designed to leave the at least two counting units (CU1, CU2) switched on while the ignition is switched off and either to increment or to decrement the at least two counters (CNT1, CNT2) of the at least two counting units (CU1, CU2) on the basis of the change of steering angle by the steering wheel and/or the steerable wheels.

2. Steering system according to Claim 1, in which the at least two counting units (CU1, CU2) each comprise at least one analogue unit (AFE1, AFE2) which is designed to take the change of steering angle by the steering wheel and/or the steerable wheels as a basis for producing a state signal (S_STATUS1, S_STATUS2), specifically such that a prescribed change of steering angle is allocated a prescribed state.

3. Steering system according to Claim 1 or 2, in which the at least two counting units (CU1, CU2) each comprise at least one state machine (SM1, SM2) which is designed to take the state signal (S_STATE1, S_STATE2) and the state prescribed thereby as a basis for producing either an increment signal (S_UP1, S_UP2) or a decrement signal (S_DOWN1, S_DOWN2) which is used to actuate the at least one counter (CNT1, CNT2) of the respective counting unit (CU1, CU2) either to increment or to decrement.

4. Steering system according to Claim 3, in which the state machine (SM1) of the first counting unit (CU1) produces a first increment signal (S_UP1) and a first decrement signal (S_DOWN1), which have an angular offset relative to a second increment signal (S_UP2) and a second decrement signal (S_DOWN2), which are produced by the state machine (SM2) of the second counting unit (CU2).

5. Steering system according to one of the preceding claims, which comprises an electric steering motor having a rotor for assisting steering for the steerable wheels, and the sensor unit comprises a sensor (MR) for capturing a position of the rotor of the electric steering motor.

6. Steering system according to Claim 5, which is designed either to increment or to decrement the at least two counters (CNT1, CNT2) of the at least two counting units after a respective full revolution of the rotor of the electric steering motor, detected by means of the sensor unit (MR).

7. Steering system according to Claim 5 or 6, which is designed either to increment or to decrement the at least two counters (CNT1, CNT2) on the basis of a direction of rotation of the rotor of the electric steering motor, specifically such that in a first direction of rotation the respective counter is incremented and in a second, opposite, direction of rotation the respective counter is decremented.

8. Steering system according to Claim 5, which comprises a decision unit (DU) which is designed to take, after the ignition of the motor vehicle has been switched on, an angle signal (S_A), which is representative of the sensor signal (S_MR) from the sensor unit (MR), as a basis for selecting one of the at least two counters (CNT1, CNT2), the counter reading of which is taken as a basis for capturing the change of steering angle by the steering wheel and/or the steerable wheels.

9. Steering system according to Claim 5, which comprises an error recognition unit (ERRD) which is designed to compare, after the ignition of the motor vehicle has been switched on, the counter readings of the at least two counters (CNT1, CNT2) with one another and to take the result of the comparison as a basis for indicating an error.

10. Steering system according to one of the preceding claims, which is designed to operate the sensor unit (MR) and/or the evaluation unit (ASIC) in power-saving fashion in a prescribed mode of operation of the steering system.

11. Steering system according to Claim 10, which is designed to switch off the sensor unit (MR) and/or the evaluation unit (ASIC) in the prescribed mode of operation of the steering system when the ignition of the motor vehicle is switched off.

12. Steering system according to Claim 1 or 10, which is designed to continue to actuate the sensor unit (MR) in clocked fashion in the prescribed mode of operation of the steering system when a change of steering angle has been ascertained when the ignition of the motor vehicle is switched off.

13. Steering system according to Claim 10, in which the prescribed mode of operation of the steering system is prescribable for a prescribed number of switching-on operations and/or switching-off operations for the ignition of the motor vehicle.

14. Steering system according to Claim 10, in which the prescribed mode of operation of the steering system can be prescribed by means of a diagnosis apparatus.

## Revendications

1. Système de direction pour un véhicule automobile ayant un volant et des roues directrices, qui comprend une unité (ASIC) d'exploitation et une unité (MR) de capteur, l'unité (MR) de capteur étant constituée pour produire un signal (S_MR) de capteur, qui est représentatif d'un angle de braquage du volant, et l'unité (ASIC) d'exploitation est constituée pour exploiter le signal (S_MR) de capteur de l'unité (MR) de capteur et cela de manière à ce que, pendant que l'allumage du véhicule automobile est coupé, au moins une partie de l'unité (ASIC) d'exploitation et de l'unité (MR) de capteur est mise en circuit et, au moyen de la partie de l'unité (ASIC) d'exploitation qui est mise en circuit, le signal (S_MR) du capteur est exploité, dans lequel, lorsque l'allumage du véhicule automobile est coupé, l'unité (MR) de capteur est commandée en cadence au moyen de l'unité (ASIC) d'exploitation et, en fonction de la commande en cadence, le signal (S_MR) de capteur est détecté au moyen de l'unité (MR) de capteur, dans lequel, pour une variation de l'angle de braquage déterminée au moyen de l'unité (ASIC) d'exploitation en fonction du signal (S_MR) de capteur détecté, l'unité (MR) de capteur est commandée de manière permanente, **caractérisé en ce que** l'unité (ASIC) d'exploitation comprend au moins deux unités (CU1, CU2) de comptage ayant respectivement au moins un compteur (CNT1, CNT2) et est constituée pour faire mettre en circuit au moins deux unités (CU1, CU2) de comptage, pendant que l'allumage est coupé, et les au moins deux compteurs (CNT1, CNT2) des au moins deux unités (CU1, CU2) de comptage sont incrémentés ou décrémentés en fonction de la variation de l'angle de braquage du volant et/ou des roues directrices.

2. Système de direction suivant la revendication 1, dans lequel les au moins deux unités (CU1, CU2) de comptage comprennent respectivement au moins une unité (AFE1, AFE2) analogique, qui est constituée pour, en fonction de la variation de l'angle du braquage du volant et/ou des roues directrices, produire un signal (S_STATUS1, S_STATUS2) d'état et cela de façon à ce qu'un état prescrit soit associé à une variation prescrite de l'angle de braquage.

3. Système de direction suivant la revendication 1 ou 2, dans lequel les au moins deux unités (CU1, CU2) de comptage comprennent respectivement au moins un automate (SM1, SM2) fini, qui est constitué pour, en fonction du signal (S_STATE1, S_STATE2) d'état et de l'état prescrit par celui-ci, produire un signal (S_UP1, S_UP2) d'incrément ou un signal (S_DOWN1, S_DOWN2) de décrément, au moyen duquel le au moins un compteur (CNT1, CNT2) de l'unité (CU1, CU2) respective de comptage est commandé pour l'incrémentation ou pour la décrémentation.

4. Système de direction suivant la revendication 3, dans lequel l'automate (SM1) fini de la première unité (CU1) de comptage produit un premier signal (S_UP1) d'incrément et un premier signal (S_DOWN1) de décrément, qui sont décalés angulairement en un deuxième signal (S_UP2) d'incrément et en un deuxième signal (S_DOWN2) de décrément, lesquels sont produits par l'automate (SM2) fini de la deuxième unité (CU2) de comptage.

5. Système de direction suivant l'une des revendications précédentes, qui comprend un moteur électrique de direction ayant un rotor pour l'assistance à la direction des roues directrices et l'unité de capteur comprend un capteur (MR) de détection d'une position du rotor du moteur électrique de direction.

6. Système de direction suivant la revendication 5, qui est constitué pour incrémenter ou décrémenter les au moins deux compteurs (CNT1, CNT2) des au moins deux unités de comptage après respectivement un tour complet, détecté au moyen de l'unité (MR) de capteur, du rotor du moteur électrique de direction.

7. Système de direction suivant la revendication 5 ou 6, qui est constitué pour incrémenter ou décrémenter les au moins deux compteurs (CNT1, CNT2), en fonction d'un sens de rotation du rotor du moteur électrique de direction, et cela de manière à incrémenter dans un premier sens de rotation le compteur respectif et à décrémenter dans un deuxième sens contraire de rotation le compteur respectif.

8. Système de direction suivant la revendication 5, qui comprend une unité (DU) de décision, qui est constituée pour, après que le véhicule automobile a été allumé, choisir, en fonction d'un signal (S_A) d'angle qui est représentatif du signal (S_MR) de capteur de l'unité (MR) de capteur, l'un des au moins deux compteurs (CNT1, CNT2), la variation de l'angle de braquage du volant et/ou des roues directrices étant détectée par l'état de ce compteur.

9. Système de direction suivant la revendication 5, qui comprend une unité (ERRD) de reconnaissance d'erreur, qui est constituée pour, après que le véhicule automobile a été allumé, comparer entre les états des au moins deux compteurs (CNT1, CNT2) et indiquer une erreur en fonction du résultat de la comparaison.

10. Système de direction suivant l'une des revendications précédentes, qui est constitué pour, dans un mode de fonctionnement prescrit du système de direction, faire fonctionner avec une économie de courant l'unité (MR) de capteur et/ou l'unité (ASIC) d'exploitation.

11. Système de direction suivant la revendication 10, qui est constitué pour, dans le mode de fonctionnement prescrit du système de direction, mettre hors circuit l'unité (MR) de capteur et/ou l'unité (ASIC) d'exploitation, lorsque l'allumage du véhicule automobile est coupé.

12. Système de direction suivant la revendication 1 ou 10, qui est constitué pour, dans le mode de fonctionnement prescrit du système de direction, continuer à commander en cadence l'unité (MR) de capteur, alors qu'une variation de l'angle de braquage a été déterminée et que l'allumage du véhicule automobile est coupé.

13. Système de direction suivant la revendication 10, dans lequel le mode de fonctionnement prescrit du système de direction peut être prescrit pour un nombre prescrit d'opérations d'allumage et/ou de coupure de l'allumage du véhicule automobile.

14. Système de direction suivant la revendication 10, dans lequel le mode de fonctionnement prescrit du système de direction peut être prescrit au moyen d'un dispositif de diagnostic.
